# FASCICULE DE BREVET EUROPEEN

(11) **EP 2 416 035 B1**
(45) Date de publication et mention de la délivrance du brevet: **29.05.2013**
(21) Numéro de dépôt: 11174749.9
(22) Date de dépôt: 20.07.2011
(51) Int. Cl.: F16H 55/36

(54) **Poulie découpleuse**
Entkoppelungsriemenscheibe
Uncoupling pulley

(30) Priorité: 02.08.2010 FR 1056382
(43) Date de publication de la demande: 08.02.2012
(73) Titulaire: HUTCHINSON, 75008 Paris (FR)
(72) Inventeur: Champalou, François, 41150 CHAUMONT SUR LOIRE (FR); Galteau, Didier, 37130 CINQ MARS LA PILE (FR); Guillot, Benoît, 37270 LARCAY (FR); Varin, Hervé, 37300 JOUE-LES-TOURS (FR)
(74) Mandataire: Reboussin, Yohann Mickaël Noël

(56) Documents cités:
- JP-A- 2006 009 899
- JP-A- 2006 112 524
- JP-A- 2010 127 294
- US-A- 4 075 873
- US-A- 4 263 996
- US-A1- 2009 194 380

## Description

La présente invention a pour objet une poulie découpleuse destinée notamment à des applications automobiles en tant que poulie d'accessoire (par exemple pour un alternateur) ou en tant que poulie de vilebrequin.

La Demande de Brevet US 2009/194380 concerne une poulie d'accessoire dans laquelle un couple est transmis entre une jante et un moyeu par un effort combiné de friction et de torsion exercé par un empilement de rondelles Belleville (ou de ressorts discoïdes).

A cet effet (figures 7 et 8 de la demande US2009/194380) un ensemble comportant deux cames séparées par un roulement à rouleaux permet de comprimer plus ou moins l'empilement de rondelles Belleville. Une première came est emmanchée à force sur le moyeu, alors que l'autre, qui peut tourner par rapport à la première, mais n'est liée en rotation ni à la jante ni au moyeu, est disposée face à l'empilement des rondelles Belleville.

En position de repos, le couple est minimal. Lorsque la poulie est entraînée, les chemins de cames tournent l'un par rapport à l'autre, ce qui entraîne la compression de l'empilement de rondelles Belleville et la génération d'un couple de friction et de torsion par l'intermédiaire des rondelles Belleville, et il en résulte la transmission d'un couple entre la jante et le moyeu pour produire le filtrage. Le cheminement du couple entre la jante et le moyeu est représenté à partir de la figure 8 de ce document à la figure 9 de la présente Demande.

On voit qu'il passe par l'empilement 400 des rondelles Belleville, ce qui implique simultanément un couple de friction et de torsion.

De plus, ce système pour fonctionner, nécessite une forte précontrainte initiale des rondelles, afin de pouvoir entraîner les cames. L'effort et le couple de friction sont donc élevés dès la mise en rotation du système.

Le fait de transmettre la totalité du couple par friction et torsion de rondelles élastiques n'est pas favorable en termes de longévité et de fiabilité.

D'autres poulies découpleuses ont été proposées dans les documents JP-A-2006 009899 et JP-A-2010 127294 qui sont conformes au préambule de la revendication 1.

Cependant, la cage à billes de ces poulies n'est pas toujours centrée entre les différents plateaux annulaires.

Il en résulte un problème pour assurer le synchronisme des différentes billes.

L'invention concerne ainsi une poulie découpleuse comportant deux éléments en rotation autour d'un axe longitudinal, à savoir une jante et un moyeu, et comportant également un support de charge assurant une rotation relative entre la jante et le moyeu, ainsi qu'un élément de transmission de couple disposé entre la jante et le moyeu, lequel comporte un dispositif élastique déformable parallèlement à l'axe longitudinal et comportant au moins un élément élastique, **dans lequel** l'élément de transmission de couple comporte :
- un premier plateau annulaire lié en rotation à l'un des deux éléments, jante ou moyeu, mais mobile axialement par rapport à celui-ci, ayant une première face d'extrémité en contact avec une première face d'extrémité du dispositif élastique déformable et une deuxième face d'extrémité opposée à la première face d'extrémité et comportant au moins un premier chemin de rampe ayant au moins une zone inclinée présentant un secteur circulaire centré sur l'axe longitudinal et faisant un angle α non nul par rapport à un plan perpendiculaire audit axe longitudinal,
- un deuxième plateau annulaire lié en rotation à l'autre des deux éléments, moyeu ou jante, ayant une face d'extrémité comportant au moins un deuxième chemin de rampe ayant au moins une zone inclinée présentant un secteur circulaire centré sur l'axe longitudinal et faisant un angle non nul par rapport à un plan perpendiculaire audit axe longitudinal ;
- une cage de maintien comportant **une pluralité de** billes, disposée entre le premier et le deuxième plateau annulaire de sorte que, en fonction de la position relative en rotation de la jante ou du moyeu, le dispositif élastique déformable est comprimé axialement par la coopération d'au moins une **dite bille** et d'au moins une dite zone inclinée de chacun des premier et deuxième plateaux annulaires, la force de compression axiale ainsi générée s'accompagnant d'une force tangentielle qui est fonction dudit angle et qui transmet un couple entre le premier et le deuxième plateau annulaire et par voie de conséquence entre la jante et le moyeu, **ladite cage comportant des billes mobiles en rotation dans celle-ci,**
**caractérisée en ce que, selon le cas, ladite cage à billes comporte des billes qui ne sont pas mobiles en rotation et de même diamètre que les billes mobiles en rotation ou des formes en relief de mêmes dimensions que les billes mobiles en rotation pour permettre d'assurer un contact sans roulement avec les chemins de rampes.**

Dans le cas de la Demande US 2009/194380, une des cames n'est liée en rotation ni à la jante ni au moyeu. Selon l'invention au contraire, le premier et le deuxième plateaux annulaires, qui comportent chacun un ou plusieurs chemins de rampes sont liés en rotation chacun à un élément en rotation différent (jante ou moyeu). La coopération avec un ou plusieurs éléments de roulement, libres en rotation sur eux-mêmes, produit une décomposition des efforts en une force axiale qui comprime axialement le dispositif élastique et en une force tangentielle qui transmet un couple de torsion directement par les chemins de rampe sans générer de torsion sur le dispositif élastique. La raideur en torsion nécessaire au filtrage est donc obtenue par conversion directe de la raideur en compression associée à la géométrie de la rampe, et les efforts sont transmis entre les plateaux annulaires et non par l'empilement des rondelles.

L'angle précité peut être constant.

Un chemin de rampe peut comporter une zone non inclinée (α = 0). Dans cette zone, il n'y a pas de transmission de couple, d'où un découplage entre la jante et le moyeu.

Plus particulièrement, le chemin de rampe peut comporter une zone centrale non inclinée (α = 0) disposée entre une première et une deuxième zone inclinées formant un angle respectivement α₁ et α₂ non nuls par rapport à un plan perpendiculaire audit axe longitudinal. Les angles α₁ et α₂ peuvent être égaux ou non, constants ou non. Leur valeur dépend de la raideur que l'on souhaite obtenir.

Le chemin de rampe peut avoir une dimension radiale qui diminue depuis une région centrale vers deux régions d'extrémité.

Le dispositif élastique peut être un empilement de rondelles élastiques telles que des rondelles Belleville, ou bien un ou plusieurs ressorts hélicoïdaux.

Le premier plateau annulaire mobile axialement est avantageusement solidaire en rotation du moyeu, alors que le deuxième plateau annulaire est solidaire en rotation de la jante. Dans ce cas, il est préféré qu'à l'opposé de la première face d'extrémité du dispositif élastique déformable, le moyeu comporte un élément de butée qui lui est solidaire en rotation et qui présente une face d'appui pour une deuxième face d'extrémité du dispositif élastique.

Cet élément de butée peut être un épaulement annulaire du moyeu ou bien une rondelle d'appui emmanchée autour du moyeu ou bien encore un flasque d'extrémité du moyeu.

Selon un mode de réalisation avantageux, l'angle précité est croissant depuis une valeur minimale dans une région de début de rampe dans laquelle le dispositif élastique déformable n'est pas comprimé jusqu'à une valeur maximale dans une région de fin de rampe dans laquelle le dispositif élastique déformable présente un compression maximale.

La valeur minimale de l'angle est de préférence égale à 0°.

La variation dudit angle peut être définie par une courbe polynomiale d'ordre 2 ou 3 (spline) passant par un premier point correspondant à la valeur minimale dans la région de début de courbe, et par un deuxième point correspondant à la valeur maximale dans la région de fin de courbe, et éventuellement par un point intermédiaire correspondant à un couple nominal maximal de la transmission entre la jante et le moyeu ainsi qu'à une raideur angulaire prédéterminée.

Le point intermédiaire correspondant par exemple pour un alternateur à une valeur nominale maximale du couple moteur transmis par exemple 12 Nm à une raideur angulaire par exemple comprise entre 0,3 Nm/° et 0,9 Nm/°.

D'autres caractéristiques et avantages de l'invention apparaîtront mieux à la lecture de la description ci-après, en liaison avec les dessins dans lesquels :
- les figures 1a et 1b représentent respectivement en coupe longitudinale (vue en perspective) et en vue éclatée une poulie d'accessoire selon un mode de réalisation de l'invention mettant en oeuvre des rondelles Belleville
- les figures 2a à 2d, 3a à 3d et 4a et 4b sont des représentations schématiques des rampes dans des positions fonctionnelles différentes afin de montrer la décomposition des efforts, depuis la position de repos illustrée par la figure 2a
- la figure 3e est une représentation du couple transmis entre les plateaux en fonction des angles α₁ et α₂
- la figure 5 est une variante de mise en oeuvre de l'invention illustrée par les figures 1a et 1b
- la figure 6 est une variante de l'invention mettant en oeuvre un ressort hélicoïdal
- la figure 7 est une poulie de vilebrequin selon un mode de réalisation de l'invention
- la figure 8 est une variante de l'invention mettant en oeuvre deux ressorts hélicoïdaux
- la figure 9 illustre le cheminement du couple entre la jante et le moyeu dans le cas de la demande de brevet US 2009/194380
- les figures 10a et 10b illustrent un mode de réalisation préféré dans lequel les rampes présentent un profil avec un angle α constamment croissant
- les figures 11a et 11b représentent en perspective et en coupe transversale un mode de réalisation de l'invention dans lequel les billes mobiles sont logées dans une cage présentant également des billes fixes ou des formes en relief.

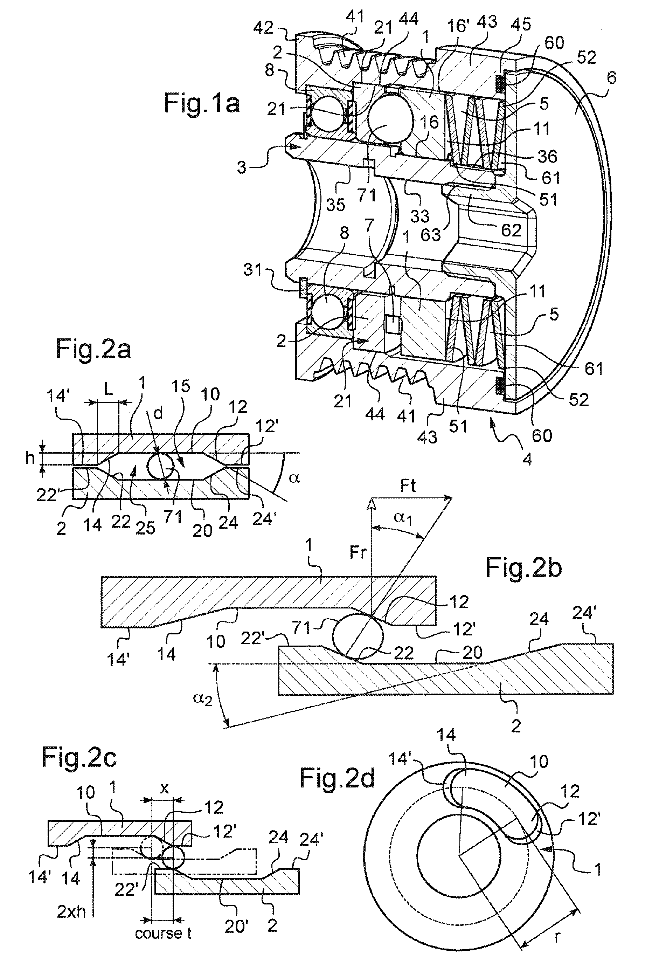

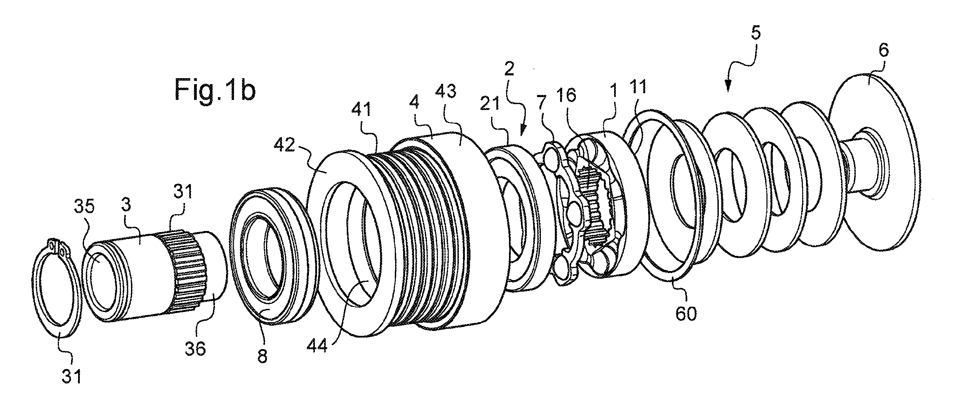

La poulie d'accessoire représentée aux figures 1a et 1b comporte une jante 4 dont le contour externe 41 est rainuré pour recevoir les dents d'une courroie multi V de type K. La jante 4 présente également une région cylindrique 43 espacée axialement du contour rainuré 41.

A cette jante 4 est lié rigidement un plateau 2 à rampes, par exemple par emmanchement par son contour cylindrique externe 21 à force sur une région cylindrique interne 44 de la jante 4, ce qui fait que le plateau 2 n'est pas mobile axialement par rapport à la jante 4. Un support de charge (roulement ou palier) 8 est monté entre la jante 4 et le moyeu 3 autorisant une rotation relative entre la jante 4 et le moyeu 3. Le moyeu 3 assure la liaison en rotation avec l'axe d'un accessoire, par exemple un alternateur. Sur ce moyeu 3 est aménagée une zone cannelée 31 sur laquelle un plateau mobile 1 à rampes peut se déplacer axialement, mais est lié en rotation à ce moyeu 3 par une cannelure 16. Entre les deux plateaux à rampes 1 et 2 est intercalé un ensemble de billes 71 maintenues en position dans une cage rigide 7. Le plateau mobile 1 est en appui par sa face d'extrémité 11 sur la face d'extrémité 51 de l'élément élastique (rondelles élastiques 5, ou ressort de compression). L'autre extrémité 52 de l'élément élastique 5 est maintenue en contact sur le flanc intérieur 61 d'un flasque 6 servant de face d'appui. Ce flasque 6 est lié rigidement en rotation au moyeu 3 et peut tourner librement par rapport à la jante 4. A cet effet, il comporte un prolongement cylindrique 62 dont le contour externe 63 est vissé ou emmanché dans le contour interne 33 du moyeu 3. Un joint d'étanchéité 60 disposé dans un logement ménagé à l'extrémité 45 de la jante est interposé entre le flasque 6 et la jante 4.Le joint d'étanchéité 60 sert d'une part à éviter la fuite de graisse qui peut être nécessaire pour favoriser le roulement des éléments de roulements sur les rampes, et d'autre part pour empêcher les intrusions venant de l'extérieur. L'ensemble est maintenu en place par un clip de verrouillage 31.

A l'état de repos, on peut ajouter une précontrainte axiale sur l'élément élastique 5. Cette précontrainte s'applique sur le plateau mobile axialement 1, la cage à billes 7 et le plateau 2. Ceci permet de supprimer les jeux de construction donnés par l'empilement des tolérances de tous les composants.

En variante, le plateau 2 peut être solidaire du moyeu 3 par son contour interne, alors que le plateau 1 mobile axialement est couplé à la jante 4 par un contour externe cannelé qui permet son mouvement axial. L'extrémité 52 du dispositif élastique 5 peut venir en butée sur une pièce solidaire de la jante 4 ou sur une collerette annulaire de celle-ci.

La figure 2a illustre la position de repos dans laquelle les billes 71 de diamètre d reposent sur une région centrale 20 sans pente (α = 0) des pistes 15 et 25 des plateaux à rampes 1 et 2.

La piste 15 présente une région centrale 10 sans pente bordée de deux régions inclinées 12 et 14 qui forment un angle α avec le plan de la région centrale 10 qui est perpendiculaire à l'axe longitudinal de la poulie.

Lors d'un passage de couple entre le moyeu 3 et la jante 4 (figure 2b) la bille 71 monte sur les pentes, ici 12 et 22, et le déplacement du plateau 1 qui est mobile axialement comprime le dispositif élastique 5, ce qui génère un effort dont la composante axiale Fr est proportionnelle à la compression du dispositif élastique 5 et une composante tangentielle Ft qui dépend de Fr et de la valeur de l'angle α qui est la même pour les deux plateaux. Le coefficient de proportionnalité correspond à la raideur Kax du dispositif élastique 5. Par ailleurs, c'est la composante tangentielle qui permet le passage de couple directement entre les plateaux 1 et 2.

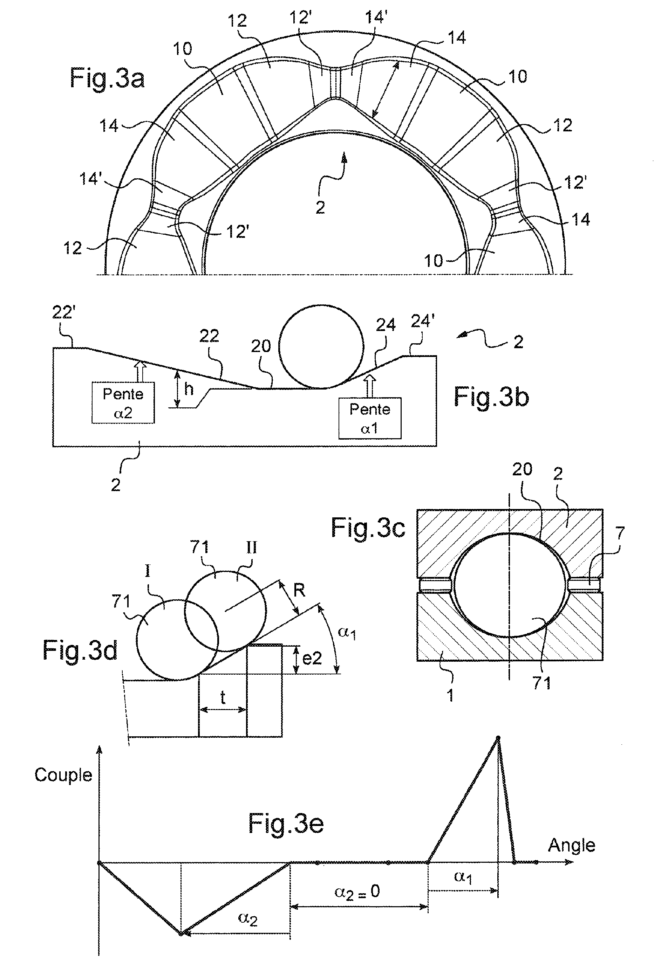

A la figure 2c, qui correspond au maximum de la compression du dispositif élastique 5, on arrive sur une région de plateau 12', 22' qui prolonge les régions inclinées 12 et 22 (figure 3a).

Dans ce cas, le couple transmis est nul.

Le couple transmis est le couple maximal lorsque la bille se trouve en contact simultané des intersections des régions 12,12' et 22,22'
La figure 2d illustre le cheminement d'une bille (71), selon une trajectoire circulaire de rayon r dans la région centrale 10.
La figure 3a en vue de face montre un exemple de plateau fixe 2 ( car non cannelé ) comprenant des rampes symétriques (la valeur de l'angle α dans cet exemple est la même pour les deux régions inclinées bordant la région centrale). La dimension radiale dr des régions 12 et 14 décroit depuis la région centrale 10 vers les extrémités où elles se raccordent aux régions 12' et 14'.

A la figure 3b, les rampes ne sont pas symétriques et sont composées de plusieurs secteurs circulaires comportant chacun une région centrale 20 (α = 0) bordées de deux régions circulaires 22 (pente α2) et 24 (pente α1).

On notera que la présence de la région centrale non inclinée n'est pas obligatoire. Une rampe peut comporter deux régions 12, 14 (ou 22, 24) qui se raccordent. Le point de repos correspond à ce raccordement.

La région inclinée 22 (pente α2) du plateau 2 coopère avec la région 12 (pente α2) du plateau 1 et la région inclinée 24 (pente α1) coopère avec la région 14 (pente α1) du plateau 1.

La figure 3c montre en coupe la forme arrondie du chemin de rampe qui permet le cheminement de celle-ci sur un secteur circulaire. Le rayon de piste 20 est légèrement supérieur au rayon de la bille 71.

La figure 3e montre l'évolution du couple transmis entre les plateaux 1 et 2 et par voie de conséquence entre la jante 4 et le moyeu 3, en fonction de la pente α1 ou α2.

Le fonctionnement est précisé ci-après.

### Fonctionnement :

### 1) Mode prise de couple.

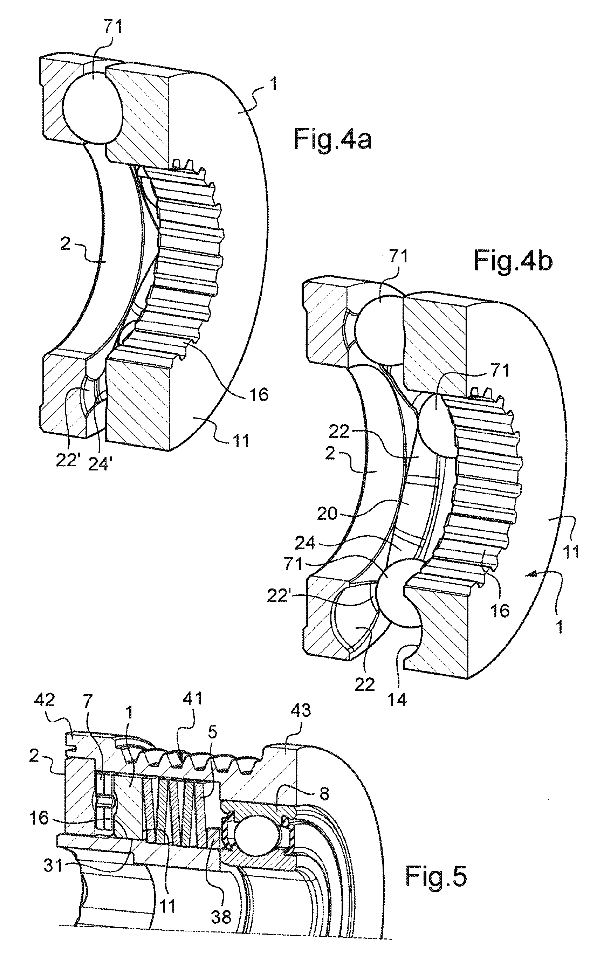

A l'état de repos (figures 1a, 2a, 4a), les billes 71 reposent au fond de la rampe, les plateaux sont rapprochés au maximum. L'effort axial est au minimum (égal à la précontrainte lorsqu'elle existe). Sous l'effet de la montée de vitesse de la jante 4 et du couple résistant de l'alternateur couplé au moyeu 3, il y a déplacement axial du plateau 1 par rapport au plateau fixe 2 grâce au déplacement des billes 71 sur la rampe d'angle α1. La montée des billes sur la rampe se traduit par un déplacement axial du plateau mobile 1 (figures 2b, 3d et 4b). Ce déplacement axial du plateau mobile 1 se traduit par une mise en compression du dispositif élastique 5. Grâce à la raideur Kax et à la compression du dispositif élastique, il y a montée de l'effort axial (F ressort :Fr). Cet effort Fr s'accompagne d'un effort tangentiel Ft au contact de la bille 71 et des rampes 12 et 22 (figures 2b et 4b). Cet effort tangentiel Ft permet de générer un couple d'entraînement grâce au rayon utile r de position des billes (figure 2d). Il y a transfert de la raideur axiale vers une raideur angulaire.

### 2) Mode sans couple

Lors des phases de décélération, il n'est pas toujours nécessaire de maintenir le couple. L'inertie de l'alternateur suffit à son entraînement en vitesse. Il ne faut pas le freiner.

Pour obtenir une zone libre de couple, on passe par une zone plane (figure 3d), de longueur de circonférence ajustable à chaque cas. La zone plane se situe à un niveau axial qui correspond à l'état de repos (effort minimum axial donné par la précontrainte éventuelle). La composante tangentielle étant nulle en l'absence de pente, il n'y a pas de transmission de couple.

### 3) Mode décélération

Il est nécessaire de finir la fin de phase de décélération avec une raideur pour éviter un choc en fin de décélération. La raideur peut être plus faible qu'en phase de montée. Pour obtenir cette raideur plus faible, la pente α2 est donc plus faible (figure 3b). C'est bien l'intérêt d'un tel dispositif que de permettre des raideurs différentes grâce à la géométrie.

### 4) Fonction limiteur de couple (rupture)

Il peut être souhaitable de limiter le couple maxi dans certaines phases. Lors de démarrage par exemple, l'accélération liée à l'inertie peut générer des couples très importants dommageables pour la transmission. Il peut s'avérer utile de limiter ces couples extrêmes qui ne sont pas utiles en mode normal.

Pour ce faire, on limite la hauteur de la pente α1 (figures 2c). A cette hauteur définie, on place un plateau droit normal à l'axe de rotation, ce qui fait qu'il n'y a plus de composante tangentielle. Le couple transmissible devient donc nul (au frottement faible près). Ceci montre qu'au-delà de cette hauteur maximale avec couple maximal, on passe à un couple quasi nul sur le plateau.

Formules littérales pour une rampe de pente α1: Figure 3d
R désigne le rayon d'une bille 71
t désigne le déplacement de la bille 71 sur la rampe de pente α1 pour une élévation e2
e2 désigne la hauteur de levée du plateau 1.
e2/t = tg α1 et t = r x θ (rd)
La hauteur de levée est e2 soit e2 = r x θ tg α1.
L'effort Fr de levée est Fr2 =Kax xe2 soit Kax r x θ x tg α 1 (en l'absence de précontrainte initiale Fr à l'état repos).
L'effort tangentiel est Ft2 = Fr2x tg α 1.
On déduit Ft2 = Kax × r × θ × (tg α 1)².
Le couple en position II est
C = Ft2 × r soit C = Kax × r² × θ × (tg α 1)². = Kax x θ x (r x tg α 1)².
La raideur angulaire Kang a pour valeur C / θ
Soit Kang = Kax × (r × tg α 1)².

On constate que la raideur angulaire est indépendante du diamètre R des billes.

### Exemple détaillé de réalisation

5 billes de diamètre 8 mm disposées à 72° dans leur cage sur un rayon utile r de 17,5 mm.

4 rondelles élastiques de diamètre extérieur 45 mm, de diamètre intérieur 22 mm et d'épaisseur 1,25 mm en acier qui donnent une raideur axiale de 400 N/mm.

α1 = 24,85° (0,443 rd) On peut calculer les différentes valeurs numériques Tg (α1 = 24,85°)² = 0,214 R² = 17,5² (mm²) = 306,2 mm² D'où (r × tg α1)2 = 65,68 mm² par radian Avec Kax = 440 N/mm

Alors Kang = 440 × 65,68 = 28 900 Nmm/rd soit en Nm/°= 0,5 Nm/°.

La raideur angulaire Kang est bien celle souhaitée pour le filtrage.

On dispose de trois paramètres (r, α1, Kax) pour obtenir la raideur angulaire de filtrage souhaitée.

La figure 5 représente une variante dans laquelle l'empilement des rondelles Belleville 5 est monté libre dans l'alésage 44 de la jante 4 et est en butée sur une couronne annulaire 38 solidaire du moyeu (ou sur une collerette du moyeu 3). Comme dans le cas des figures 1a et 1b, le dispositif élastique 5 est ainsi logé entre le premier plateau 1 solidaire en rotation du moyeu 3 et une pièce (flasque 6, couronne annulaire 38 ou collerette) solidaire en rotation du moyeu 3, ce qui fait que le dispositif élastique 5 n'est soumis qu'à un effet de compression axiale, à l'exclusion d'une torsion ou d'une friction.

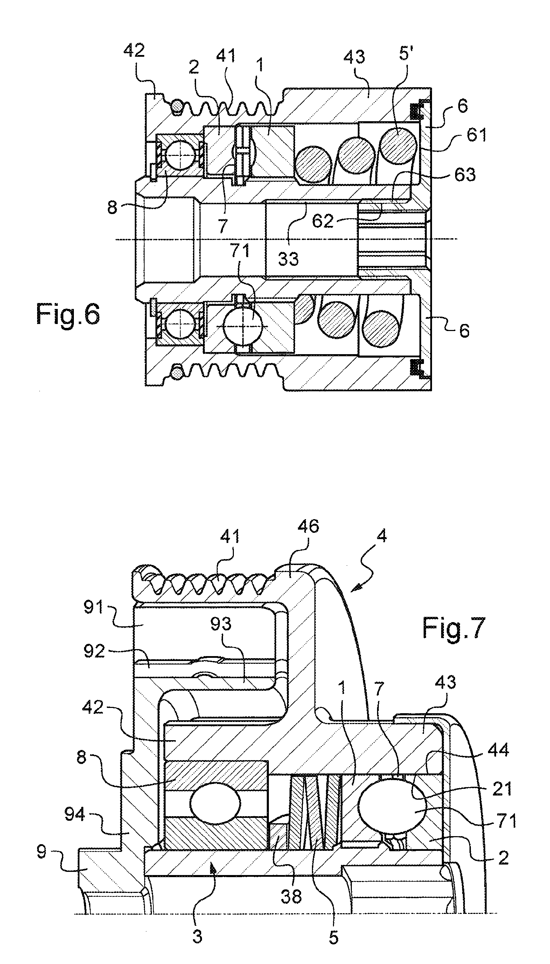

La figure 6 illustre une variante des figures 1a et 1b dans laquelle le dispositif élastique est un ressort hélicoïdal 5'.

La figure 7 illustre une poulie de vilebrequin dans laquelle est logé un dispositif selon l'invention.

Un amortisseur de vibrations de torsion haute fréquence AVT est logé dans une cavité entre la région cylindrique interne 42 et une région cylindrique 46 qui présente un contour externe 41 rainuré pour recevoir une courroie automobile de type K. Cet amortisseur de vibrations a pour fonction d'absorber les vibrations de torsion à haute fréquence propres au vilebrequin en général dans la gamme 200 Hz à 400 Hz.

L'amortisseur comporte à cet effet un anneau élastomère 92 solidaire d'une part d'un prolongement cylindrique 93 d'un flasque 94 d'une pièce 9 liée en rotation au moyeu 3 et à une masselotte 91 en forme de couronne.

Comme dans le cas de la figure 5, le dispositif élastique 5 est disposé entre la face 11 du plateau annulaire 1 solidaire en rotation du moyeu et une pièce (ou collerette) 38 solidaire en rotation du moyeu 3.

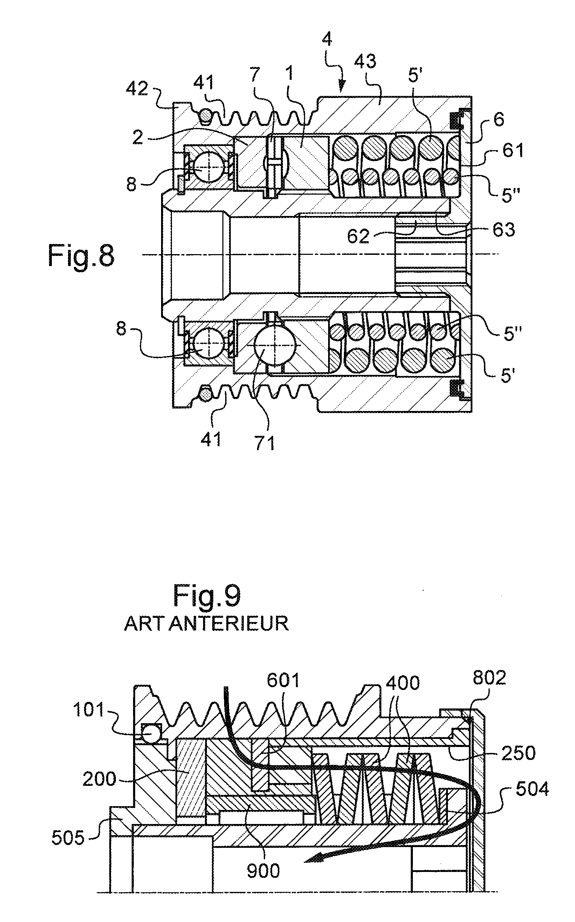

La figure 8 est une variante de la figure 4 dans laquelle le dispositif élastique est composé de deux ressorts hélicoïdaux 5' et 5" en parallèle.

Il peut ne pas être utile d'avoir une fonction limiteur de couple. En effet, lors de forts couples par exemple au démarrage, par exemple dans une application de type ADS, il peut s'avérer nécessaire d'obtenir un couple résistant allant au-delà du couple maximal délivré par le système élastique. A cette fin, on peut prévoir une butée par exemple sur la jante, limitant le déplacement axial du plateau mobile. Cette butée peut être équipée de dispositifs amortissant les chocs de contacts.

Dans un système à rampe linéaire (α constant) tel que décrit ci-dessus, le synchronisme des plateaux fixes et mobiles n'est pas optimum en raison d'un glissement possible entre les billes et les rampes. Les billes peuvent ne pas rouler sans glissement.

Le synchronisme des plateaux est défini par un déphasage angulaire, mesuré par rapport à l'axe de la bille, équivalent entre le plateau fixe et le plateau mobile.

Une variante préférée de l'invention propose une forme de rampe qui permet de rouler en limitant ou en évitant le glissement afin d'assurer un synchronisme amélioré.

Il est montré qu'une forme non linéaire avec un angle de pente α croissant sur toute la plage de fonctionnement est une réponse à ce problème. Une forme sinusoïdale telle que mentionnée dans la demande US 2009/194380 n'est pas adaptée car elle ne présente pas une pente croissante sur tout son angle de déformation.

A l'état de repos (premier point de la courbe), la pente est de préférence nulle, ce qui présente le premier état décrit précédemment (éventuellement sous faible précontrainte ressort).

La pente croît progressivement pendant la rotation jusqu'à atteindre une valeur maximale (deuxième point de la courbe). La valeur maximale du débattement angulaire β de la poulie est conditionnée à la fois par le nombre de billes et par le couple maximum nécessaire. Par exemple pour 6 billes, l'angle β maximal est par exemple égal à 60°.

Si l'on souhaite par exemple un couple maximal de 25 Nm à ce niveau d'angle β maximal de débattement et avec une pente α maximale, on peut définir le point extrême de la courbe.

Un point intermédiaire (notamment point médian) de la courbe de pente croissante est avantageusement choisi comme étant le point de couple maximum de l'équipement électrique entraîné, par exemple 12Nm pour un alternateur. Il est disposé angulairement de telle sorte que la raideur angulaire résultante fournie par le dispositif élastique soit comprise entre 0,3 et 0,9 Nm/° (pour un alternateur). Ceci est la raideur angulaire souhaitée pour assurer le filtrage du système.

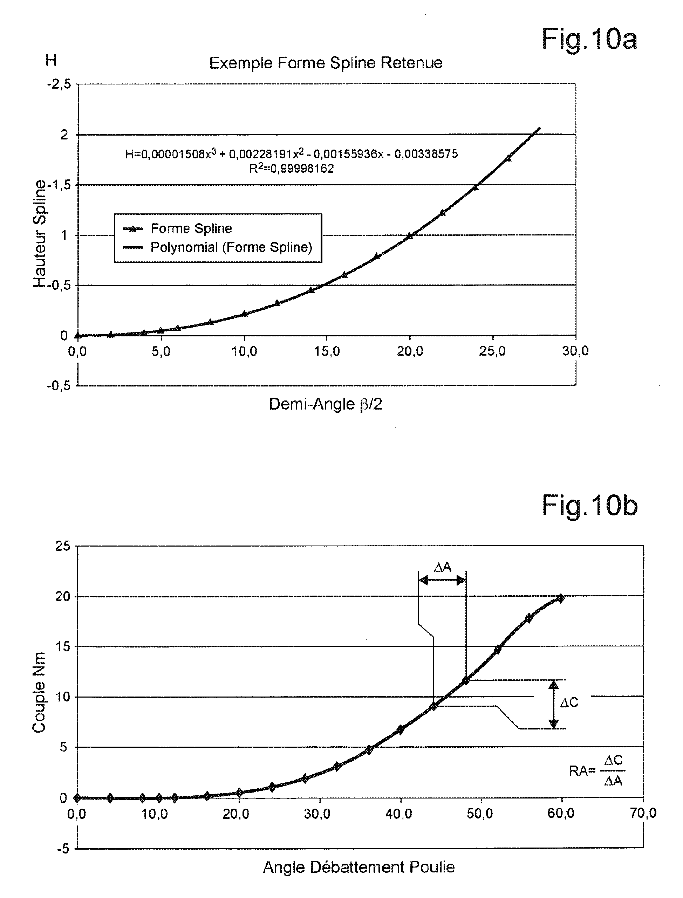

La courbe de la rampe (hauteur H du point courant en fonction de l'angle β de débattement de la poulie) est de forme générale polynomiale (voir figures 10a et 10b). Sur ces figures, n'est représentée que la partie positive de la courbe que suit une bille avec un débattement angulaire de β/2 ; l'autre partie située de l'autre côté de la bille étant symétrique. Chacun des plateaux annulaires étant lié en rotation pour l'un à la jante et pour l'autre au moyeu, l'angle de débattement β de la poulie est égal à deux fois celui que permet chacun des plateaux. On peut prévoir par exemple un angle β/2 de l'ordre de 28° pour 6 rampes réparties de manière identique et une hauteur H allant de 0 à 3 mm environ et plus particulièrement entre 0 et 2 mm.

On peut calculer l'effort en tout point de déformation.

En un point donné de la courbe correspondant à une valeur donnée du débattement angulaire β, le couple et la raideur angulaire RA sont d'autant plus élevés que la raideur axiale du dispositif élastique (rondelles Belleville ou ressort) est élevée. L raideur angulaire Kang dépend en outre de la valeur de l'angle α en ce point (comme le montrent les formules données plus dans la description).

Soit par exemple un empilage de 4 rondelles de diamètre intérieur 22,4 mm et de diamètre intérieur de 45 mm ayant une épaisseur 1,5 mm. Par exemple, pour un couple de 12 Nm, l'élévation sur la rampe est 1,48 mm (déplacement du plateau de 2,96 mm), l'effort sur les rondelles est de 1340 N. Ceci est obtenu par des calculs géométriques et de décomposition d'efforts classiques.

La raideur angulaire RA est obtenue au point considéré grâce au calcul de l'accroissement de couple par rapport à l'accroissement d'angle soit RA = ΔC/ΔA. En l'occurrence dans l'exemple la raideur en ce point est de l'ordre de 0,7 Nm/° ce qui est recherché.

Par principe avec cette forme de courbe la raideur croît de manière continue de même que la raideur angulaire RA. On peut construire la courbe par exemple à partir de ces trois points caractéristiques en utilisant de préférence une fonction polynomiale (spline) d'ordre 2 ou d'ordre 3.

Les points courants situés entre le premier point et le point intermédiaire correspondent à une transmission du couple jusqu'à la valeur maximale prévue pour l'équipement considéré (par exemple alternateur).

Les points courants entre le point intermédiaire et le deuxième point correspondent au transfert de couple au-delà de ladite valeur maximale, ce qui se produit par exemple au ralenti en raison de l'acyclisme du moteur.

La courbe de couple (Fig 10b) est représentée sur la poulie complète avec l'angle β donc double de celui de la rampe seule (β/2).

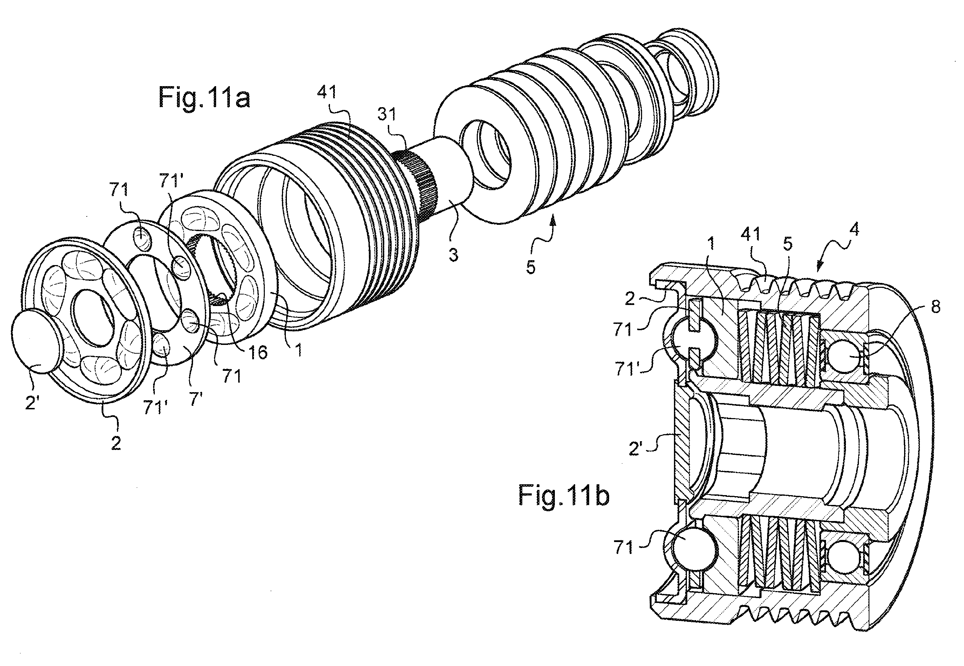

Les figures 11a et 11b montrent un mode de réalisation avantageux de l'invention dans lequel les billes 71 sont disposées libres en rotation dans une cage à billes 7'.

Cette cage à billes 7' présente également des billes 71' qui ne sont pas mobiles en rotation, soit qu'il s'agisse de billes telles que 71 qui sont immobilisées dans la cage à billes 7', soit qu'il s'agisse de formes en relief 71' qui ont la même dimension que les billes 71.

Les billes 71 mobiles en rotation assurent les contacts et les transmissions de couple, alors que les billes 71' qui ne sont pas mobiles en rotation ou les formes en relief (qui par exemple viennent de moulage avec la cage à billes) permettent d'assurer un contact sans roulement avec les rampes, ce qui assure un centrage de la cage entre les plateaux annulaires 1, 2, 35, quelle que soit l'élévation H du plateau 1 qui est mobile axialement. Les billes 71 sont logées dans des perçages cylindriques de diamètre légèrement supérieur. La cage à billes 7' garantit le synchronisme des billes 71 en restant centrée entre les plateaux par l'intermédiaire des formes en relief 71'.

## Revendications

1. Poulie découpleuse comportant deux éléments en rotation autour d'un axe longitudinal, à savoir une jante et un moyeu, et comportant également un support de charge assurant une rotation relative entre la jante et le moyeu, ainsi qu'un élément de transmission de couple disposé entre la jante et le moyeu, lequel comporte un dispositif élastique déformable parallèlement à l'axe longitudinal et comportant au moins un élément élastique, dans lequel l'élément de transmission de couple comporte:
- un premier plateau annulaire (1) lié en rotation à l'un des deux éléments, jante (4) ou moyeu (3) et mobile axialement par rapport à celui-ci, ayant une première face d'extrémité (11) en contact avec une première face d'extrémité (51) du dispositif élastique (5) et une deuxième face d'extrémité opposée à la première face d'extrémité et comportant au moins un premier chemin de rampe ayant au moins une zone inclinée (12,14) formant un secteur circulaire centré sur l'axe longitudinal et faisant un angle (α, α₁, α₂) non nul par rapport à un plan perpendiculaire audit axe longitudinal,
- un deuxième plateau annulaire (2) lié en rotation à l'autre des deux éléments, moyeu (3) ou jante (4), ayant une face d'extrémité comportant au moins un deuxième chemin de rampe ayant au moins une zone inclinée (22,24) formant un secteur circulaire centré sur l'axe longitudinal et faisant un angle (α, α1, α2) non nul par rapport à un plan perpendiculaire audit axe longitudinal,
- une cage de maintien (7, 7') comportant une pluralité de billes (71), disposée entre le premier (1) et le deuxième (2) plateau annulaire de sorte que, en fonction de la position relative en rotation de la jante (4) et du moyeu, le dispositif élastique déformable (5) est comprimé axialement par la coopération d'au moins une dite bille (71) et d'au moins une dite zone inclinée (12,14;22,24) de chacun des premier (1) et deuxième (2) plateaux annulaires, la force de compression axiale ainsi générée s'accompagnant d'une force tangentielle qui est fonction dudit angle et qui transmet un couple entre le premier (1) et le deuxième (2) plateaux annulaires et par voie de conséquence entre la jante (4) et le moyeu (3), ladite cage de maintien comportant des billes (71) mobiles en rotation dans celle-ci (7, 7'),
**caractérisée en ce que**, selon le cas, ladite cage à billes (7, 7') comporte des billes qui ne sont pas mobiles en rotation et de même diamètre que les billes (71) mobiles en rotation ou des formes en relief (71') de mêmes dimensions que les billes (71) mobiles en rotation pour permettre d'assurer un contact sans roulement avec les chemins de rampes.

2. Poulie découpleuse selon la revendication 1, **caractérisée en ce que** ledit angle (α, α₁, α₂) est constant.

3. Poulie découpleuse selon une des revendications 1 ou 2, **caractérisée en ce qu'**un chemin de rampe comporte également au moins une zone non inclinée (10,20) (α = 0).

4. Poulie découpleuse selon la revendication 3, **caractérisée en ce que** le chemin de rampe comporte une zone centrale non inclinée (10,20) disposée entre une première (12,22) et une deuxième (22,24) zones inclinées formant un angle respectivement α₁ et α₂ non nul par rapport à un plan perpendiculaire audit axe longitudinal.

5. Poulie découpleuse selon la revendication 4, **caractérisée en ce que** α₁ = α₂.

6. Poulie découpleuse selon la revendication 1, **caractérisée en ce que** le chemin de rampe a une dimension radiale qui diminue depuis une région centrale vers deux régions d'extrémité.

7. Poulie découpleuse selon une des revendications précédentes, **caractérisée en ce que** le dispositif élastique est un empilement de rondelles Belleville.

8. Poulie découpleuse selon une des revendications 1 à 6, **caractérisée en ce que** le dispositif élastique comporte au moins un ressort hélicoïdal (5',5").

9. Poulie découpleuse selon une des revendications précédentes, **caractérisée en ce que** le premier plateau annulaire (1) est solidaire en rotation du moyeu (3) et **en ce que** le deuxième plateau annulaire (2) est solidaire en rotation de la jante (4).

10. Poulie découpleuse selon la revendication 9, **caractérisée en ce que**, à l'opposé de la première face d'extrémité (51) du dispositif élastique déformable (5), le moyeu (3) comporte un élément de butée (61,38) qui lui est solidaire en rotation et qui présente une face d'appui pour une deuxième face d'extrémité (52) du dispositif élastique déformable (5).

11. Poulie découpleuse selon la revendication 10, **caractérisée en ce que** l'élément de butée est un épaulement annulaire du moyeu ou une rondelle d'appui annulaire (38) emmanchée autour du moyeu (3).

12. Poulie découpleuse selon la revendication 10, **caractérisée en ce que** l'élément de butée est un flasque d'extrémité (6) du moyeu (3).

13. Poulie découpleuse selon une des revendications précédentes, **caractérisé en ce que** ledit angle (α, α₁, α₂) est croissant depuis une valeur minimale dans une région de début de rampe dans laquelle le dispositif élastique déformable (5) n'est pas comprimé axialement jusqu'à une valeur maximale dans une région de fin de rampe dans laquelle le dispositif élastique déformable (5) présente un compression axiale maximale.

14. Poulie découpleuse selon la revendication 13, **caractérisée en ce que** dans la région de début de rame la valeur angulaire minimale est égale à 0°.

15. Poulie découpleuse selon une des revendications 13 ou 14, **caractérisé en ce que** la variation dudit angle (α, α₁, α₂) est définie par une courbe polynomiale d'ordre 2 ou 3 passant par un premier point correspondant à la valeur minimale de l'angle α dans la région de début de courbe, et par un deuxième point correspondant à la valeur maximale dans la région de fin de courbe.

16. Poulie découpleuse selon la revendication 15, **caractérisée en ce que** ladite courbe polynomiale passe également par un point intermédiaire correspondant à un couple nominal maximal de transmission entre la jante (4) et le moyeu (2) et à une raideur angulaire prédéterminée.

17. Poulie découpleuse selon une des revendications précédentes, **caractérisé en ce que** la jante et/ou le moyeu présente une butée limitant le déplacement axial du premier (1) et/ou de deuxième (2) plateau annulaire.

## Patentansprüche

1. Entkopplungsriemenscheibe, die zwei Elemente zur Rotation um eine Längsachse, insbesondere eine Felge und eine Nabe, aufweist und ebenfalls eine Laststütze aufweist, die eine Relativrotation zwischen der Felge und der Nabe sicherstellt, sowie ein Drehmomentübertragungselement, das sich zwischen der Felge und der Nabe befindet, wobei dieses eine elastische, parallel zur Längsachse verformbare Vorrichtung aufweist, die zumindest ein elastisches Element aufweist, wobei das Drehmomentübertragungselement aufweist:
- eine erste Ringscheibe (1), die zur Rotation mit einem der zwei Elemente, der Felge (4) oder der Nabe (3), verbunden ist und in Bezug auf dieses axial beweglich ist, wobei diese eine erste Stirnfläche (11) in Berührung mit einer ersten Stirnfläche (51) der elastischen Vorrichtung (5) und eine zweite Stirnfläche hat, die zur ersten Stirnfläche entgegensetzt ist und zumindest einen ersten Steigungsweg aufweist, der zumindest einen geneigte Bereich (12, 14) hat, der einen Kreissektor bildet, der auf der Längsachse zentriert ist, und einen von Null verschiedenen Winkel (α, α₁,α₂) in Bezug auf eine Ebene, die zur Längsachse senkrecht verläuft, bildet,
- eine zweite Ringscheibe (2), die zur Rotation mit dem anderen der zwei Elemente, der Nabe (3) oder der Felge (4), verbunden ist, wobei diese eine Stirnfläche hat, die zumindest einen zweiten Steigungsweg aufweist, der zumindest einen geneigten Bereich (22, 24) hat, der einen Kreissektor bildet, der auf der Längsachse zentriert ist, und einen von Null verschiedenen Winkel (α, α1,α2) in Bezug auf eine Ebene, die zur Längsachse senkrecht verläuft, bildet,
einen Haltekäfig (7, 7'), der eine Vielzahl an Kugeln (71) aufweist, der sich zwischen der ersten Ringscheibe (1) und der zweiten Ringscheibe (2) in der Weise befindet, dass in Abhängigkeit von der Rotationsrelativposition der Felge (4) und der Nabe die elastische, verformbare Vorrichtung (5) durch das Zusammenwirken von zumindest einer Kugel (71) und zumindest einem geneigten Bereich (12, 14; 22, 24) von jeder der Ringscheiben erste Ringscheibe (1) und zweite Ringscheibe (2) axial komprimiert wird, wobei die so erzeugte axiale Kompressionskraft von einer Tangentialkraft begleitet wird, die winkelabhängig ist und die ein Drehmoment zwischen der ersten Ringscheibe (1) und der zweiten Ringscheibe (2) und folglich zwischen der Felge (4) und der Nabe (3) überträgt, wobei der Haltekäfig Kugeln (71) aufweist, die zur Rotation in diesem (7, 7') beweglich sind,
**dadurch gekennzeichnet, dass** fallabhängig der Kugelkäfig (7, 7') aufweist: Kugeln, die nicht zur Rotation beweglich sind und die den gleichen Durchmesser wie die Kugeln (71) haben, die zur Rotation beweglich sind, oder erhabene Formen (71') mit gleichen Abmessungen wie die Kugeln (71), die zur Rotation beweglich sind, um einen Kontakt ohne Rollen mit den Steigungswegen abzusichern.

2. Entkopplungsriemenscheibe nach Anspruch 1, **dadurch gekennzeichnet, dass** der Winkel (α, α₁,α₂) konstant ist.

3. Entkopplungsriemenscheibe nach Anspruch 1 oder 2, **dadurch gekennzeichnet, dass** ein Steigungsweg ebenfalls zumindest einen nicht geneigten Bereich (10, 20) (α=0) aufweist.

4. Entkopplungsriemenscheibe nach Anspruch 3, **dadurch gekennzeichnet, dass** der Steigungsweg einen mittleren, nicht geneigten Bereich (10, 20) aufweist, der sich zwischen einem ersten geneigten Bereich (12, 22) und einem zweiten geneigten Bereich (22, 24) befindet, wobei ein jeweiliger, von Null verschiedener Winkel α₁ und α₂ in Bezug auf eine Ebene, die zur Längsachse senkrecht ist, gebildet wird.

5. Entkopplungsriemenscheibe nach Anspruch 4, **dadurch gekennzeichnet, dass** α₁=α₂ ist.

6. Entkopplungsriemenscheibe nach Anspruch 1, **dadurch gekennzeichnet, dass** der Steigungsweg eine Radialabmessung hat, die sich von einem mittleren Bereich zu zwei Endbereichen verringert.

7. Entkopplungsriemenscheibe nach einem der vorhergehenden Ansprüche, **dadurch gekennzeichnet, dass** die elastische Vorrichtung ein Stapel von Federtellern ist.

8. Entkopplungsriemenscheibe nach einem der Ansprüche 1 bis 6, **dadurch gekennzeichnet, dass** die elastische Vorrichtung zumindest eine Schraubenfeder (5', 5") aufweist.

9. Entkopplungsriemenscheibe nach einem der vorhergehenden Ansprüche, **dadurch gekennzeichnet, dass** die erste Ringscheibe (1) mit der Nabe (3) zur Rotation verbunden ist und dass die zweite Ringscheibe (2) mit der Felge (4) zur Rotation verbunden ist.

10. Entkopplungsriemenscheibe nach Anspruch 9, **dadurch gekennzeichnet, dass** entgegengesetzt zur ersten Stirnfläche (51) der elastischen, verformbaren Vorrichtung (5) die Nabe (3) ein Anschlagelement (61, 38) aufweist, das mit dieser zur Rotation verbunden ist und das eine Stützfläche für eine zweite Stirnfläche (52) der elastischen, verformbaren Vorrichtung (5) aufweist.

11. Entkopplungsriemenscheibe nach Anspruch 10, **dadurch gekennzeichnet, dass** das Anschlagelement ein ringförmiger Vorsprung der Nabe oder eine ringförmige Stützscheibe (38), die um die Nabe (3) herum gepresst ist, ist.

12. Entkopplungsriemenscheibe nach Anspruch 10, **dadurch gekennzeichnet, dass** das Anschlagelement eine Stirn-Seitenwand (6) der Nabe (3) ist.

13. Entkopplungsriemenscheibe nach einem der vorhergehenden Ansprüche, **dadurch gekennzeichnet, dass** der Winkel (α, α₁,α₂) von einem Minimalwert in einem Bereich des Beginns der Steigung, in dem die elastische, verformbare Vorrichtung (5) axial nicht komprimiert wird, bis zu einem Maximalwert in einem Endbereich der Steigung, in dem die elastische, verformbare Vorrichtung (5) eine maximale axiale Kompression aufweist, zunimmt.

14. Entkopplungsriemenscheibe nach Anspruch 13, **dadurch gekennzeichnet, dass** im Bereich des Beginns der Steigung der minimale Winkelwert gleich 0° ist.

15. Entkopplungsriemenscheibe nach einem der Ansprüche 13 oder 14, **dadurch gekennzeichnet, dass** die Änderung des Winkels (α, α₁,α₂) durch eine Polynomkurve zweiter oder dritter Ordnung definiert ist, wobei über einen ersten Punkt gegangen wird, der dem Minimalwert des Winkels α entspricht, und zwar im Bereich des Beginns der Kurve, und über einen zweiten Punkt gegangen wird, der dem Maximalwert entspricht, und zwar im Bereich des Endes der Kurve.

16. Entkopplungsriemenscheibe nach Anspruch 15, **dadurch gekennzeichnet, dass** die Polynomkurve ebenfalls über einen Zwischenpunkt geht, der einem maximalen Nenndrehmoment der Übertragung zwischen der Felge (4) und der Nabe (2) und einer vorbestimmten Winkelstarrheit entspricht.

17. Entkopplungsriemenscheibe nach einem der vorhergehenden Ansprüche, **dadurch gekennzeichnet, dass** die Felge und/oder die Nabe einen Anschlag aufweist, der die Axialverschiebung der ersten Ringscheibe (1) und/oder der zweiten Ringscheibe (2) begrenzt.

## Claims

1. A decoupling pulley comprising two elements in rotation about a longitudinal axis, namely a rim and a hub, and also comprising a load support enabling relative rotation between the rim and the hub, together with a torque transmission element arranged between the rim and the hub, and including a resilient device that is deformable parallel to the longitudinal axis and including at least one resilient element, wherein the torque transmission element comprises:
· a first annular plate (1) constrained to rotate with one of the two elements constituted by the rim (4) and the hub (3), and axially movable relative thereto, having a first end face (11) in contact with a first end face (51) of the resilient device (5) and a second end face, opposite from the first end face, and including at least a first ramp path having at least one inclined zone (12, 14) forming a circular sector centered on the longitudinal axis and forming a non-zero angle (α, α₁, α2) relative to a plane perpendicular to said longitudinal axis;
· a second annular plate (2) constrained to rotate with the other one of the two elements comprising the hub (3) and the rim (4), having an end face including at least one second ramp path having at least one inclined zone (22, 24) forming a circular sector centered on the longitudinal axis and making a non-zero angle (α, α1, α2) relative to a plane perpendicular to said longitudinal axis; and
· a holding cage (7, 7') including a plurality of balls (71), placed between the first and second annular plates (1, 2) in such a manner that as a function of the relative angular position of the rim (4) and the hub, the deformable resilient device (5) is compressed axially by co-operation between at least one said ball (71) and at least one said inclined zone (12, 14; 22, 24) of each of the first and second annular plates (1, 2), the axial compression force as generated in this way being accompanied by a tangential force that is a function of said angle and that transmits torque between the first and second annular plates (1, 2), and consequently between the rim (4) and the hub (3), said holding cage including balls (71) that are movable in rotation therein (7, 7'),
**characterized in that**, as appropriate, said ball cage (7, 7') includes balls that are not movable in rotation and that have the same diameter as the balls (71) that are movable in rotation, or it includes shapes in relief (71') having the same dimensions as the balls (71) that are movable in rotation, to provide non-rolling contact with the ramp paths.

2. A decoupling pulley according to claim 1, **characterized in that** said angle (α, α1, α2) is constant.

3. A decoupling pulley according to claim 1 or claim 2, **characterized in that** a ramp path also includes at least one non-inclined zone (10, 20) (α=0).

4. A decoupling pulley according to claim 3, **characterized in that** the ramp path includes a non-inclined central zone (10, 20) arranged between first and second inclined zones (12, 22; 22, 24) forming respective non-zero angles α1 and α2 relative to a plane perpendicular to said longitudinal axis.

5. A decoupling pulley according to claim 4, **characterized in that** α1 = α2.

6. A decoupling pulley according to claim 1, **characterized in that** the ramp path has a radial

7. A decoupling pulley according to any preceding claim, **characterized in that** the resilient device is a stack of Belleville spring washers.

8. A decoupling pulley according to any one of claims 1 to 6, **characterized in that** the resilient device comprises at least one coil spring (5', 5").

9. A decoupling pulley according to any preceding claim, **characterized in that** the first annular plate (1) is constrained to rotate with the hub (3) and **in that** the second annular plate (2) is constrained to rotate with the rim (4).

10. A decoupling pulley according to claim 9, **characterized in that**, opposite from the first end face (51) of the deformable resilient device (5), the hub (3) includes an abutment element (61, 38) that is constrained to rotate together therewith in rotation and that presents a bearing face for a second end face (52) of the deformable resilient device (5).

11. A decoupling pulley according to claim 10, **characterized in that** the abutment element is an annular shoulder of the hub or an annular bearing washer (38) engaged around the hub (3).

12. A decoupling pulley according to claim 10, **characterized in that** the abutment element is an endplate (6) of the hub (3).

13. A decoupling pulley according to any preceding claim, **characterized in that** said angle (α, α1, α2) increases from a minimum value in a starting region of the ramp in which the deformable resilient device (5) is not axially compressed up to a maximum value in an end region of the ramp in which the deformable resilient device (5) presents maximum axial compression.

14. A decoupling pulley according to claim 13, **characterized in that** the minimum angular value in the start region of the ramp is equal to 0°.

15. A decoupling pulley according to claim 13 or claim 14, **characterized in that** the variation of said angle (α, α1, α2) is defined by a polynomial curve of second or third order passing via a first point corresponding to the minimum value of the angle α in the starting region of the curve, and via a second point corresponding to the maximum value in the region of the end of the curve.

16. A decoupling pulley according to claim 15, **characterized in that** said polynomial curve also passes via an intermediate point corresponding to a nominal maximum torque for transmission between the rim (4) and the hub (3), and to a predetermined angular stiffness.

17. A decoupling pulley according to any preceding claim, **characterized in that** the rim and/or the hub present(s) an abutment limiting the axial movement of the first and/or second annular plate (1, 2).
